# EUROPEAN PATENT APPLICATION

(11) **EP 2 506 053 A1**
(43) Date of publication of application: **03.10.2012**
(21) Application number: 11250607.6
(22) Date of filing: 29.06.2011
(51) Int. Cl.: G02B 6/44, H02G 9/10

(54) **Optical fibre management cap coupling box**

(30) Priority: 31.03.2011 EP 11250414
(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

A method of moving an optical fibre joint between a storage position within a pit and a working position substantially outside the pit, by rolling the optical fibre joint about its longitudinal axis.

## Description

This invention relates to apparatus, systems and methods relating to optical fibre management, in particular to distribution nodes and joints for deployment as distribution infrastructure in an optical fibre telecommunications network.

The ever-greater deployment of optical fibre in the distribution and access network to bring fibre closer to customers (FTTx) involves the provisioning of greater numbers of optical connections to commercial as well as non-commercial premises. A particular problem is the amount of space needed to accommodate all the additional plant and equipment that will be needed. As may be expected, this is an undertaking on a huge scale, involving considerable civil engineering time and cost, which nonetheless must be carried out in a cost-sensitive and -efficient manner.

There is considerable pressure to maximise the use of existing infrastructure such as footway boxes and telephone poles to accommodate all the extra equipment needed to replace copper connections with optical fibre. The availability of additional space for installing e.g. new footway boxes is extremely limited; this is especially so in residential areas where there is little unused public space, and where aesthetics are of importance. The sheer scale of the undertaking across the country and the time, cost, and inconvenience involved has been a key feature in the delay in installing FTTx worldwide.

Within the "last mile" of a telecommunications network, nodes (also known as "joints", "closures" or "enclosures") serve as fibre distribution and aggregation points as well as for purposes of splitting optical signals in a passive optical network (PON). Very broadly, such nodes allow an optical fibre cable to be received within its housing, for a fibre within the cable to be broken out, isolated and then connected (by splicing or connectorising) to another fibre leading to its destination at the customer end. In a passive optical network (PON), the infrastructure would include optical splitter nodes (comprising one or more splitter array sub-assemblies (SASAs)) which enable a single optical fibre to serve multiple customer premises.

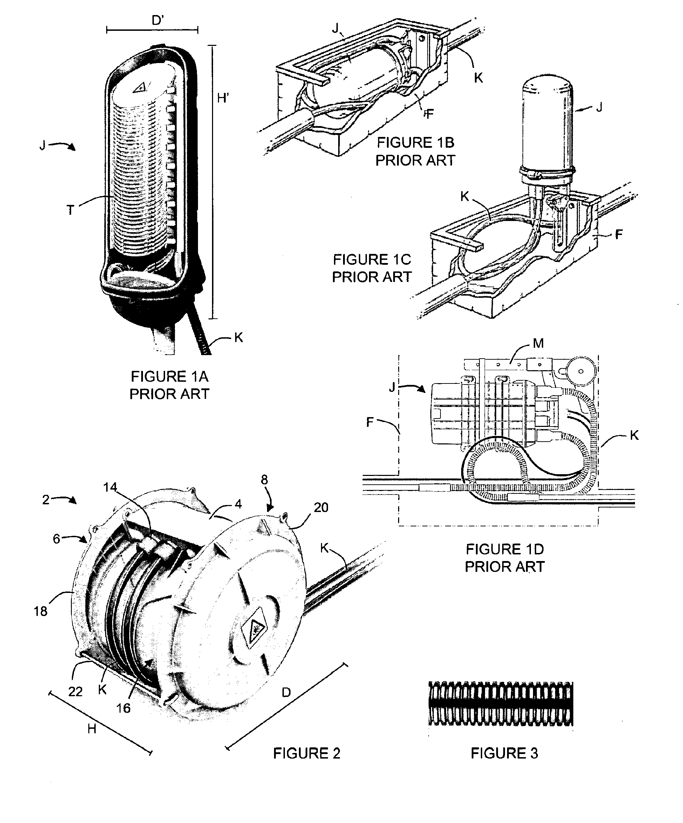

**An example of splice closures or joints of the type referred to above is the FIST-GCO2-F sealed enclosure available from Tyco Electronics Raychem N.V. of Belgium, whose website is located at www.tycoelectronics.com. This unit is has a single element splicing capacity of 96 fibres on 8 trays (sometimes known as cassettes), or 144 fibres on 12 trays. Representative drawings of such prior art joints (J) are depicted in** **Figures 1** **A to 1 D.** **Figure 1** **A shows how a number of trays (T) (or a number of tray sub-assemblies) make up a tray assembly**. In use, an optical fibre cable (K) extends to and from the joint at its base as shown, allowing for an individual fibre or fibre unit to be broken out from the optical cable armour or sheathing in which it is encased, and led to a tray for splicing. The trays are **pivotably attached in a row or stack to a backplane (not shown). The manner of attachment allows for the functional surfaces or faces of the trays (typically their upper surfaces, when oriented with respect to a field engineer, operative or other user) to be exposed for access when they need to be worked upon by pivoting the other trays out of the way, and then for them to be closed back into a stack and stored away. The height or length of the backplane is a chief determinant of the capacity of the enclosure in that it puts a limit on the number of splice trays that may be contained in the joint.** If the joint is to serve as a splitter node, one or more are attached to tray assembly backplane.

Examples of such nodes are described in US 6112006 and GB 2445960. Not all tray assemblies comprise moveable stacks on a linear backplane: in US 6112006, the trays are arranged radially about a central member, and is pivotably mounted at their bases allowing for their faces to be exposed by pivoting the trays outwardly and downwardly of the central member. It may be noted that that pivoting motion moves a tray through 90 degrees, and would put the mechanically-fragile fibre on tray through a similar range of movement. An operative will have to move around the joint to access a particular tray (unlike the above-described tray assembly in which all the trays face the operative), and can be unwieldy in use as it requires working on an unsupported tray surface which is hanging without any support.

Further views of such a joint with its cover on are shown in Figures 1 B and 1C, which depict the joint (J) in a footway box, manhole or other housing cavity (F). As can be seen, the joint with its domed cover on has a substantially cylindrical shape and is taller or longer than it is wide, owing mainly to the way the trays are disposed along the backplane as discussed above. Figure 1 B shows the prior art joint in a stored position, in which it lies horizontally on its long axis, and takes up much or all the available space in the footway box. Figure 1C depicts the node in a vertical, working, position allowing for an operative to work on the trays after removing the cover so expose the tray assembly as shown in Figure 1A. During use, the joint is rotated through 90 degrees to move between the storage and working positions respectively shown in the figures. For this, a sufficient slack or reserve in the cable (K) length is necessary to allow the joint to be raised, preferably to a height above ground level, for the operative to work on. The extra length of cable extending longitudinally from the base of the cylindrical node is also accommodated within the footway box.

Examples of such nodes are, again, described in US 6112006 and GB 2445960. A variation in which the overall shape of the node is an elongated cube is described in US 2007/0047894; yet other approaches in which the cable extend from the joint base and is stored within the footway box are described in DE 4140701, US 6829494 and US 4709980.

Up to now, such joints of the prior art shown in Figures 1A to 1C have served their purpose well enough in their role within the access network in which a fibre connection was a premium service and used mainly by relatively few commercial or industrial entities. As noted above however, there is now a need to use the existing network infrastructure in a way to better use the available space to serve a vastly greater number of customers so that any new digs and civil engineering work in general can be kept to a minimum.

As part of the push for greater efficiencies in FTTx deployment, attempts have been made to increase the capacity of such joints e.g. by adding more trays, or by removing the rigid sheath of the optical cable so it protrudes a shorter distance from the base of the node. While there has been some success in scaling down the components making up conventional joints to squeeze plant into existing footway boxes, the relentless pressure on space is such that minor adjustments and modifications of known approaches are unlikely to properly address the full scale of the problem. It would be desirable to develop a solution which increases node capacity in the same or a considerably smaller space envelope, which can be worked upon by a single operative in a cost-efficient manner. It would be of great advantage to use exiting footway boxes to their fullest capacity, without having to build to construct new housing for joints.

It would also be desirable to address the need to future proof the installation of FTTx plant and equipment, e.g. by providing some flexibility in the use of joints to serve different purposes within the telecommunications network. In the access network, it is possible for joints to be used in distribution points, aggregation points, and in splitter nodes. Further flexibility and adaptability could be afforded by providing the option of accommodating not only spliced fibres within such joints, but also connectorised fibre (i.e. with mechanically cooperating fibre connectors to form demountable optical connections). Due at least in part to the size of the connectors themselves, managing and storing connectorised fibres typically require more space than in the case of spliced fibres in a protective sleeve. For that reason, apparatus for use with connectorised fibres tend to be bigger than that for use with spliced fibre. Trays for accommodating both spliced and connectorised fibre are known from EP 0529830 and EP 0657757, but these are large in size, with all the attendant disadvantages thereof, making them less suitable for space-pressured FTTx applications.

According to a first aspect of the invention, there is provided a method of moving an optical fibre joint between a storage position within a pit and a working position substantially outside the pit, by rolling the optical fibre joint about its central or longitudinal axis.

Rotating or rolling the fibre joint up and down to bring it in and out of the pit or footway box, takes up less room than pivoting it through 90 degrees as is practised in the prior art. In preferred embodiments, the joint can be raised and secured at various heights from the pit, by use of a mounting bar to which the joint is pinned to. A user can select the part of the mounting bar to which to pin the joint to, which would determine its height from the ground or the pit. The rolling action by which the joint is raised allows for different sections of the joint to be accessed, especially when it is pinned to the mounting bar at different heights, e.g. for purposes of installing an optical fibre tray, or to access an already-installed tray to work on.

An associated advantage of this aspect is that a joint devoid of fibre trays can be provided on Day 1, and gradually populated e.g. only when a customer requires a connection: this can be effected by iteratively moving the joint over a length of time over different heights so as to access different parts of the joint to install or to work upon the trays.

In one embodiment, an optical cable leads to (or from) the joint in such a way so that the cable is wrapped around the circumferential surface of the cylindrical housing of the joint while in the storage position within the pit. When it is desired to raise the joint from the pit, the cable is unwrapped from the surface of the cylindrical housing by the rolling action. It is of course possible for the cable to disposed in another manner i.e. not being wrapped around the body of the joint in the stored position, but e.g. loosely hanging away from the housing in a way allowing for the joint to be rolled out in a smaller space envelope when compared with the prior art method of pivoting the joint out through 90 degrees.

In a further aspect of the invention, there is provided an optical fibre joint comprising
- a cylindrical housing, and
- securing means,
wherein the optical fibre joint is configured to move between a storage position within a pit and a working position substantially outside the pit by rolling the optical fibre joint about its longitudinal axis, the optical fibre joint, and to be secured in the working position using the securing means.

Systems, methods and apparatus embodying the present invention will now be described by way of example only, with reference to the following drawings, wherein:
Figures 1 A to 1 D depict views of joints of the prior art,
Figure 2 shows an embodiment of the joint of the invention with its covers on,
Figure 3 depicts tubing for optical cables;
Figures 4A to 4C are views of another embodiment of the joint with its covers on,
Figure 5 shows the joint with the fibre cable cover open,
Figure 6 depicts the cable store under the fibre cable cover;
Figure 7 shows the joint with the tray assembly cover removed in a storage position,
Figures 8A to 8D show details of the tray assembly,
Figure 9 shows how the tray assembly moves to a working position from a storage position,
Figures 10A to 10d are views of the tray assembly in use,
Figures 11 A and 11 B show broken out tube being routed to the tray assembly,
Figures 12A and 12B show how a cable is brought to a cable transition point,
Figure 13 shows how the joint is brought out of the footway box to its working position,
Figures 14A to 14D are views of footway boxes containing various numbers of joints,
Figures 15A to 15C depict the stages in a tray assembly build sequence,
Figures 16A to 16F depict the stages in a tray assembly build sequence with the joint being held in different working positions,
Figure 17 shows a pole-mounted implementation including a further embodiment of the joint,
Figure 18 shows a street pillar including a further embodiment of the joint, and
Figure 19 shows a footway cylinder including a further embodiment of the joint.

As briefly discussed above, Figures 1A to 1D depicts views of an optical fibre management joint (J) of the prior art in a footway box (F). With its cover on, the joint has a tall domed or generally cylindrical shape. The cables (K) extending from its base are each typically encased in a tough external sheath, which protects the fragile optical fibres within. (Where blown fibre is deployed or to be deployed, the cable may comprise blown fibre tubes, which may or may not yet be populated by optical fibre which is blown into and through them.)

The overall profile of the prior art joint or node is tall in that its length or height (H') is greater than its diameter (D'). This is due in the main to the way the trays are arranged as linear stack to along a backplane along a substantially straight line. As noted above, this configuration has the advantage of allowing the operative convenient access to any specific tray without having to move himself or the joint around, by "flipping" through the tray stack to find and then select the desired tray. If further trays were added to such a stack to increase capacity, the joint height would increase, which may prevent the longer joint from fitting into conventional footway boxes in the manner shown in Figure 1 B. Also from this figure, it can be seen that the stiff sheathed cables (K) protruding from the base of the joint housing. This increases the overall working height of the joint, which needs accommodation, as does the reserve lengths of cable shown in Figures 1C and 1 D which are needed to raise the joint to a height at which an operative can safely and conveniently work at. A mounting bracket (M) secured to the joint is used for this purpose, which can be seen from Figure 1 D.

Footway boxes, sometimes referred to as joint underground footway boxes (JUF), are legacy infrastructure originally dimensioned to accommodate copper plant which is generally smaller than fibre joints. At the customer end of the network in the UK, a footway joint box "JUF2" would typically measure 250 x 725 x 695 mm.

A first embodiment of a joint (2) according to the invention is shown in Figure 2. It can be seen that from this view that it too, has the overall shape of a cylinder, but one which is "shorter" in that it has a reduced length or height "H" relative to its diameter "D", when compared with the joint of the prior art discussed in connection with Figures 1A to 1D. In one embodiment, the joint is about 250 to 350 mm diameter x 218 mm height or length.

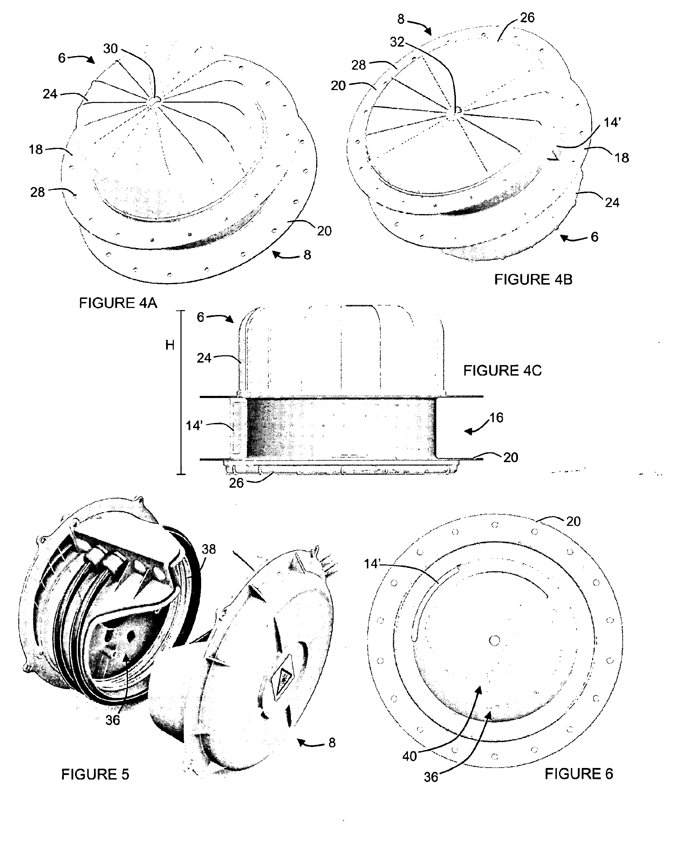

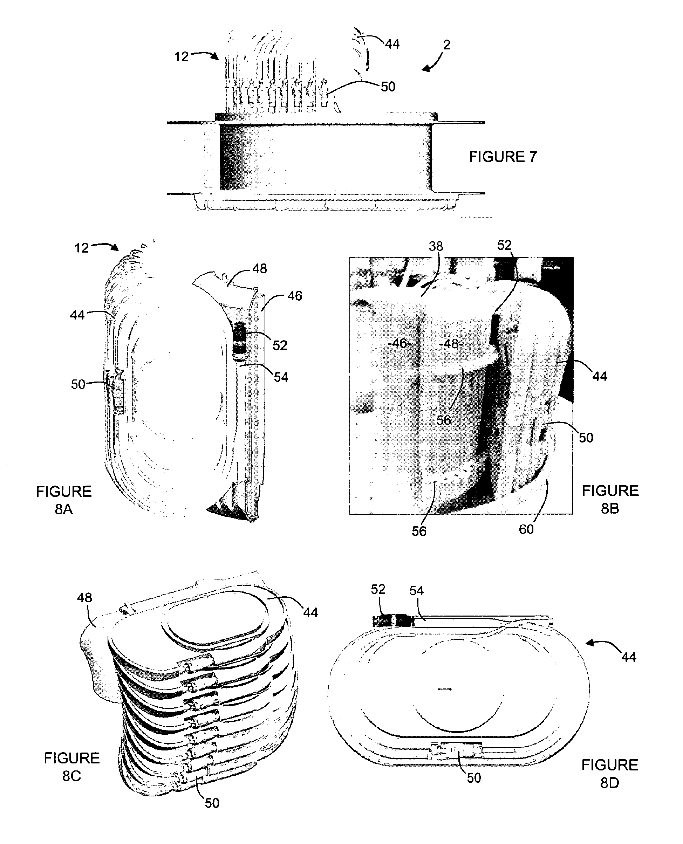

In this embodiment, the joint comprises a cylindrical housing (4) which is capped at each end with a cover (6, 8). The first cover (8) (in this Figure 2) serves to protect within a fibre tube storage area (36, in Figure 5) optical fibre tubes (38, in Figure 5) which have been broken out of the optical cables (K). The other cover (6) protects the tray assembly(s) (12, in Figure 7). As was the case in the prior art joint discussed above, one or more relatively rigid cables (K) between the joint and points beyond the footway box, which may be locations towards the core network, or towards the customer end of the network. (References in this application to a cable "direction" such as "extends towards", "enters" and the like in respect of the joint, shall be deemed to include the opposite cable "direction" such as "extends from", "exits" and the like as appropriate.) It can be seen from Figure 2 that the cables (K) exit the housing of the joint from exit ports (14), in a direction which is orthogonal or perpendicular to the height (H) of the joint.

In the joint's stored position shown in Figure 2, the cables are wrapped or coiled around the circumferential outwardly-facing surface of the housing (4). Preferably, the sheathing at this section of the cable is pliable so that it is capable of a greater degree of flexibility compared to the armoured cable typically used within the access network for distribution purposes, which may be too stiff to be rolled around the joint housing (as is the case with the 12-tube blown fibre tube cable). The external sheathing may be removed from such cables within the vicinity of the joint and re-housed in e.g. corrugated tubes such as "Quick-Click" nylon conduits manufactured by Kopex International of Birmingham, UK (illustrated in Figure 3), which allow controlled bending about and around the joint housing. The cylindrical surface of the housing itself is dimensioned to serve as a mandrel for the cables to ensure that the fibres within do not exceed the minimum bend radius. The exact external dimensions would vary depending on its application and the fibre to be used, but an exemplary splitter node according to the invention would be 358 mm diameter x 218 mm height.

In the embodiment shown, a recessed portion or well (16) defined in part by the overhanging or projecting edges (18, 20) of the two cap covers, is provided for the storage of cables around the when they are wrapped around the outside of the joint. It is possible to wrap the cables one or more full turns about the joint housing within the cable well, or less than one full turn (as shown in Figure 2), in dependence on the specific application and the conditions and environment of use. A retention pin (22) is preferably included to help prevent excessive cable movement during storage and when it is being moved to and from its working position in a rolling action as will be described below.

By coiling the cables on and against the cylindrical surface of the joint, there is no need to provide for separate means to guard against fibre overbend. The other significant benefit is that the extent of cable projection in the present joint is significantly reduced compared with that of a conventional joint where the exiting cable projects outwardly from the joint base in a direction parallel to the height or long axis of the housing. This means that the overall working height of the joint is reduced by the extent of cable projection length previously required in conventional joints.

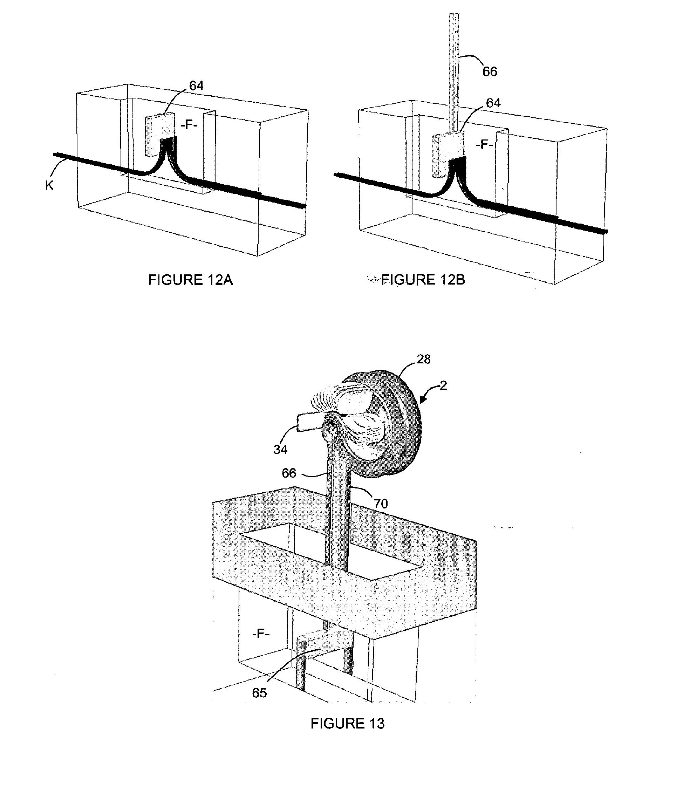

Figures 4A to 4C show views of another embodiment of the invention. Here, the tray assembly cover (6) shown in Figure 2 has a substantially domed shape, comprising a crown portion (24) and a projecting brim or edge (18). As can be seen from the side view depicted in Figure 4C, the height of the crown contributes to the overall height (H) of the joint. On the opposite end of the cylindrical housing is the fibre tube protection cover (8), more visible from Figure 4B and 4C, which in this embodiment comprises a projecting edge (20) and a substantially disc-like cover (26). The cable storage well (16) which is empty of cables in Figure 4B, is defined between the two projecting edges (18, 20) and clearly visible in Figure 4C. Unlike the cable entry ports (14) of the embodiment discussed above in connection with Figure 2 which holds each cable in a specific position within the well, the cable entry port shown in Figure 4C comprises a single, larger, entry aperture (14') which is simpler to construct and allow a number of cables to be handled as a group. Preferably, each joint cover can be secured to the housing with a single screw through its centre (30, 32) for ease of cover removal and replacement. A number of perforations (28) surround the periphery of each projecting edge: as will be discussed further below in connection with Figure 13, these serve to cooperate with a staple or locking pin (34) for purposes of securing the joint into a working position when raised out of the footway box.

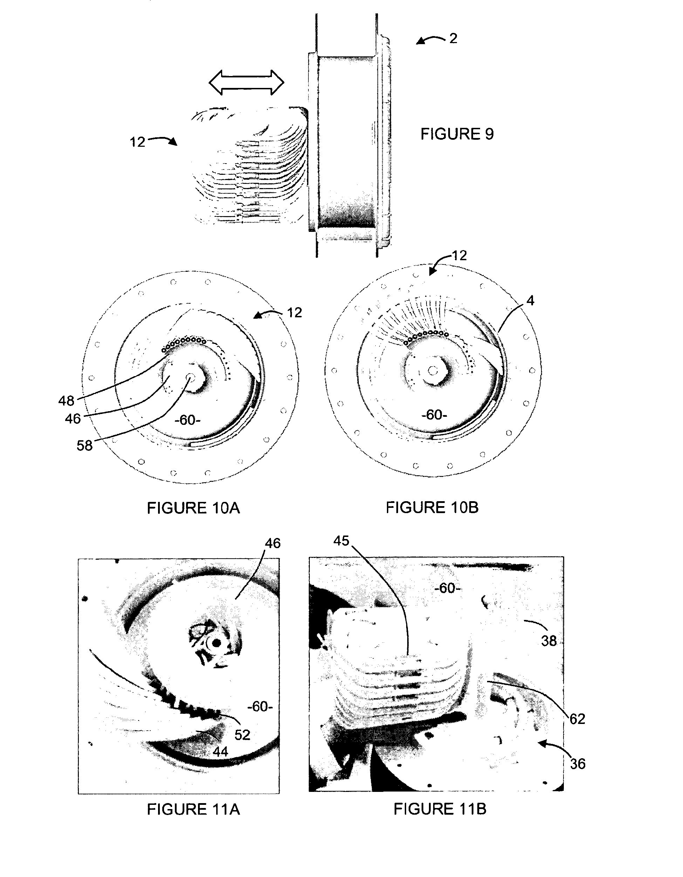

Figure 5 depicts a view of the embodiment discussed in connection with Figure 2, with its fibre tube protection cover (8) open. In use, cables (K) retain their protective sheathing, or are housed within a corrugated tubular conduit when located outside the joint housing (4). Upon transition into housing however, the fibre tubes (38) (which accommodate an individual fibre or fibre unit) are broken out of their outer sheathing. As can be seen from this drawing as well as in Figure 11 B, the fibre tubes are stored in a coiled arrangement within a fibre tube storage area (36) within the housing. This can be held tight against the wall making up the fibre storage area, or in loose coils (which may be bunched together for unitary handling) as shown in Figure 11B. The fibre tubes containing individual optical fibres are then led to a tray within the joint housing as will be discussed below in connection with Figures 11A and 11B. A view of the fibre tube store of the second embodiment (discussed above in connection with e.g. Figure 4A) can be seen from Figure 6, which describes a more controlled approach to the storage of broken-out tubes. A recessed guide (40) configured to which respects fibre minimum bend radius is provided, which describes a looped path for the fibre. In use, the fibre tubes are pushed into the recess and kept in place by retention tabs.

Turning now to Figure 7, this depicts a view of the second embodiment in which the tray assembly cover (6) has been removed, enabling a view of the location of the tray assembly (12) within the housing of the joint (2). This is the position taken by the joint when it is in storage (i.e. when it is not being worked on), in which the tray assembly is partly recessed into the housing. The tray assembly comprises a plurality of trays (44) stacked in a radial configuration about a central spine (46 in Figure 8A). The tray assembly may comprise splice trays (in a Splice Only Sub-Assembly or SOSA) and/or splitter trays (in a Splitter Array Sub-Assembly or SASA).

Figures 8A to 8C depict details of the tray assembly (12). Figure 8A shows a sub-assembly of trays (44) which are pivotably hinged to a backplane (48). The backplane in turn is attached to a spine (46). In an exemplary application, up to four sub-assemblies each comprising nine trays can be provided in a joint of the type discussed here. Advantageously, it is not necessary to install all four sub-assemblies on "Day 1", allowing for them to be provided reactively and in response to e.g. customer demand and requirements, as shown in Figure 11A, which shows one installed sub-assembly, and a two-tray sub-assembly. In one application, sub-assemblies can be factory-provided on its own backplane (48) for installation onto the spine on site when required.

Another view of the backplane is available from Figure 8B, in which the central spine (46) and pivoting hinge points (56) to which the trays (44) are attached can also be seen. In this embodiment, the central spine comprises a tube or funnel (46), and has within it a bore (58 in Figure 10A) with a substantially circular cross section, which communicates the length or height of the spine through to the fibre tube store (36 in Figure 5) at the funnel base. Fibre tubes can thus be routed to and from the fibre tube store through the funnel. The funnel is attached at one end to a disc-like base plate (60, also visible in Figure 11 B) which separates the tray assembly section of the joint from the fibre tube store. The base plate has a gradually-rising lip along its circumference which is profiled to control fibre bend. When installed, the trays, backplanes, spine and base are all attached to each other and, as a tray assembly unit, is slideably mounted on a central stake (62 in Figure 11 B) through the bore of the spine. As will be explained below in connection with e.g. Figure 9, this tray assembly unit can be moved from a joint stored position to a joint working position by sliding it along the stake during use.

Still referring to Figure 8B, the funnel of the spine flares outwardly away from the bore at the end opposite to the base plate. The flared profile helps to control the bend radius of tubes and any optical fibre within it exiting the funnel. The backplane attached to the spine comprises a member having the length or height of the spine and which is configured to curve about the circumferential surface of the spine. At the end co-terminus with the flared exit end of the funnel, the backplane is curved in a profile which co-operates with the flare of the funnel, to collectively control the bend of fibres and fibre tubes exiting the funnel and being routed along the backplane towards a destination tray.

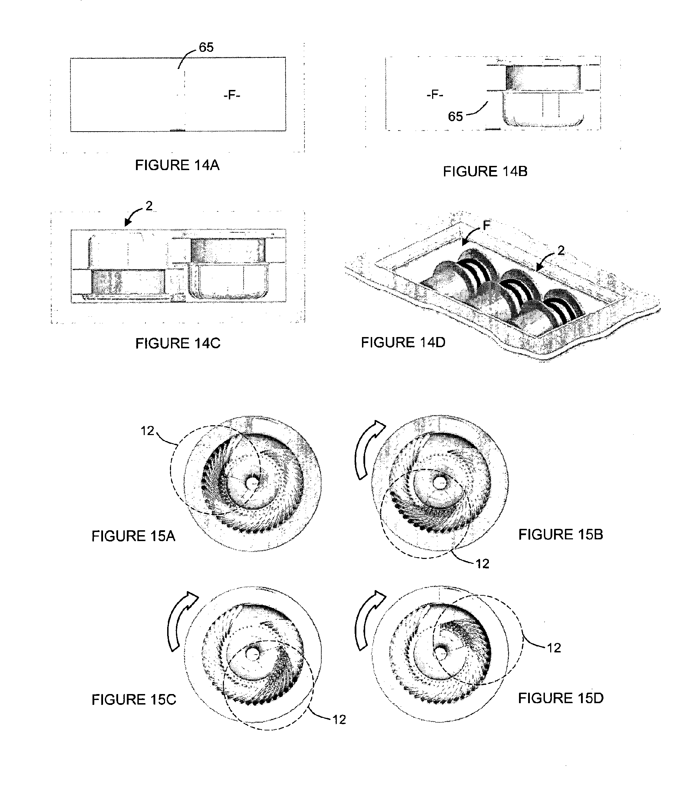

When all the backplanes supporting the sub-assemblies are installed, they collectively surround the central spine. In turn, the plurality of trays almost fully surround the centre in a radial configuration. In an embodiment, the tray would not fully surround the central spine, as it would then be very difficult to open the trays sufficiently fully to enable convenient work on the desired tray face. For this reason, the contiguous spaces for six or more trays are left unoccupied, as shown in e.g. Figure 15A.

Advantageously, the radial tray arrangement enables substantially the same length of tube can lead through the central funnel to be routed to any one of the trays in the radial arrangement. This may be contrasted with the tray assembly in joints of the prior art, in which different lengths of tube would have to provided in dependence on whether the destination tray is located at the top of the linear stack, or at the bottom. Tubes are provided and cut on site by operatives, which takes up considerable time and effort. In one implementation for blown fibre, the joint of the invention may be factory-provided with empty tubes which are blown fibre ready, as the lengths of tube are the same regardless of its destination tray, which would represent significant time and cost savings.

The hinge points in this embodiment comprise an upper and a lower ring which forms a pair of attachment points for each tray, although it will be appreciated that any other suitable pivoting retention mechanism can be used.

Figure 8C depicts a tray sub-assembly depicting details of the trays. In the tray stack shown, it can be seen that each tray is curved in a radial direction along the shorter axis of the oval tray. The curved configuration gives structural strength of the tray by increasing its rigidity, and also helps to retain fibres against the face of the tray, as they are inherently resilient along their length and thus liable to "spring" out of position even from under retention tabs.

As shown in Figure 8D, each tray (44) has a substantially oval, plate-like configuration which, when installed, is hinged onto the backplane along one of the longer sides of the oval. A conventional splice protection bay (45) for housing typically four sleeved spliced fibres is provided as shown in Figure 11 B. A fibre tube entering the tray at the input section (54) would in typically comprise a 4 mm tube, and a reducing tube connector (52) allows the transition to be made to the smaller 3 mm tube deployed within the trays. The fibre within its tube is then routed around the tray in an elliptical fashion. In one embodiment, the fibre is "locked" against movement within the tube by frictional engagement of the surface of the fibre against a length of the internal tube sidewall. The effect is improved by use of a tube which has a high-friction internal surface. In contrast with the creation of a single locking point (e.g. by clamping the fibre), the locking effect is spread out over a length, which reduces the likelihood of failure when the fibre is pulled. No additional looking component is needed for this purpose.

A gas-block connector (50) is provided on the tray at the longer side of the oval tray opposite to the side hinging the tray to the backplane. Due to its radial configuration, each tray also tapers in thickness in the radial direction along the shorter axis of the oval tray, so that the tray is at its thinnest immediately adjacent to the backplane, and thickest at its outer long edge. This allows for a greater number of trays to be hinged (indirectly) on the tubular spice than would be the case for a tray having uniform thickness throughout, which, if deployed would suffer the risk of damage to their outer edges owing to a lack of mechanical support.

The increased area at the outer tray rim provides opportunities for solutions which are otherwise too large or bulky for use on conventional fibre trays. For example, a lens-coupled (LC) typically has a square cross section of about 6mm square, which is much larger than the size of a sleeve containing spliced fibres. However, in an embodiment where the thickness of the outer rim of the tray is approximately 9 mm or more, an LC or MU connector or other type of mechanical optical fibre connector could be deployed at the location occupied by the gas-block connector. Demountable optical connections may be formed within enclosures and housings of considerably smaller size than is conventional for connectorised fibres. This considerably expands the possibilities of use of the joint in a variety of applications and contexts, as previous trays used in such enclosures were simply too small or thin to consider for connectorised fibre use.

Figures 9, 10A and 10B depict the tray assembly in use. As noted above in connection with Figure 8B, the tray assembly unit (comprising trays, backplanes, spine and base) is slideably mounted on a central stake (62 in Figure 11 B), and can be moved between a joint storage position (shown in Figures 7, 10A and 11A), and a joint working position (shown in Figures 9 and 10B). In the joint storage position, all the trays are closely stacked together so that none of the tray faces are exposed. As shown in the top view of the tray assembly in Figure 10A (and also in Figure 15A), this causes the trays to lie in an obliquely radial configuration relative to the central spine. When in this position, the outer periphery of all the trays lie within the confines of the raised lip of the tray base (60) and housing (4). This helps to secure the tray assembly and prevents unwanted movement such as the trays opening up (as shown in Figure 10B) while in storage. When the tray assembly unit is slid away from the housing in the manner depicted by the arrow in Figure 9 to assume the working position, the trays are brought clear of the confines of the tray base and housing. This allows them to be pivoted opened in the manner shown in Figure 10B, so that an operative can "flip" through the tray stack to find a specific tray to work on its face. When the work is done, the trays can be folded or stacked back together, and the tray assembly unit reinstated to its storage position by sliding it back towards the housing.

The view in Figure 9 shows how the tray assembly is positioned so that the long axis (H) of the joint housing is substantially horizontal, so that the tray faces are directed substantially upwards, affording an operative convenient access. Although Figure 7 shows the joint in a position in which the long axis (H) of the joint housing is vertical, it is possible for the joint to also be stored in the same orientation as the working position, as will be discussed below in connection with Figure 14B.

Figure 11A is a top view of the joint in its stored position, and shows how the entry inlet (54) of the trays is configured so that fibre tubes entering selected trays via the reducing tube connector (52) would not be displaced as a tray moves from a closed, storage, position to an open, working position. This is due to the location of the attachment points (56) on the backplanes themselves, about which the tray pivots. In this way, trays which are already populated would not be disturbed by later activity on other trays.

Figure 11 B is a view of the tray assembly unit pulled right off the central stake (62), exposing the fibre tube storage (36) which would normally be hidden under the tray base (60). The fibre tubes (38) are here shown to be simply coiled, although as noted above in connection with Figure 6 they can be stored in a more controlled manner. The tray assembly unit would not in normal use be slid off the stake in this manner; if required it would be possible to constrain the extent to which the tray assembly unit can move away from the joint housing in the field, to prevent it from pulling off accidentally.

Figures 12A and 12B depict how network cables (to/from the core network) and customer cables (to/from customer premises) are connected using the joint at e.g. a distribution joint or splitter node point. Within a footway box (F) constructed within the ground, cables (K) from either direction are brought to and terminated at a cable transition point (64) also in the footway box. In the embodiment discussed above, the rigid cable sheathing can be removed at this point, and the tube elements within can be re-housed in a more flexible conduit e.g. a corrugated tube of the type shown in Figure 3, which is led to the joint and rolled around its housing. Selected fibres within the cable(s) can then be broken out of the corrugated tube when brought into the joint, and then connected to each other by e.g. fusion splicing or connecterising, as described above. The cable transition point is centrally located within the footway box next to or near one or more joints, and includes cable bend management components to ensure safe cable bending along its route to termination.

As shown in Figure 13, a slotted mounting frame (65) is provided at or near the cable transition point. When it is desired to raise the joint (2) from the footway box (F), the operative inserts a mounting bar or bracket (66) into the slots of the mounting frame to secure it vertically so that it extends upwardly from within the footway box. The mounting bracket comprises a simple bar of a length at least equal to the distance between the mounting frame in the footway box and the height to which the joint to be raised. It has at one end protrusions to engage with the slots of the mounting frame within the footway box, and includes a plurality of holes (70) along its long edge. To raise the joint into its working position, it is rotated or rolled upwards about its central axis in a direction which uncoils or unrolls the cables (K) surrounding the joint housing. This can be carried out by rotating it against the mounting bracket as a guide. Alternatively, the unrolling act can performed free of support, as the joint will be designed to be within recognised safety standards for a single operative to handle in terms of weight, size, and the like. For example, the joint housing and components therein will mostly if not all, be formed out of a lightweight plastic material.

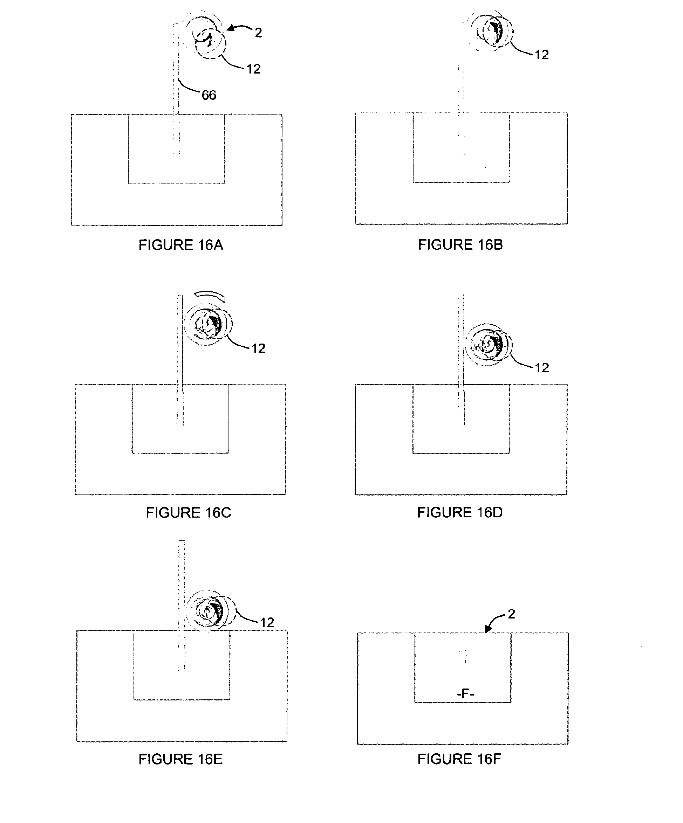

Once the desired height has been reached, the joint is held in place in the air as shown in Figure 13, using a retaining pin (34) which slots through corresponding holes in the joint (28) and holes in the mounting bracket (70). It can form part of the operative's toolkit which would be brought onsite as needed. The location of the joint on the mounting bracket is chiefly dependent on where a required tray is on the tray assembly. Because the tray assembly does not, in this embodiment, rotate about the central spine independently of the joint housing, it is necessary to rotate the whole joint to access a particular tray. Thus, more or fewer rotations of the joint would be necessary for an operative standing in a given place to gain access to and work upon a particular tray which is located in a particular section of the radial tray assembly. This is discussed further below in connection with Figures 15A to 15D and 16A to 16F.

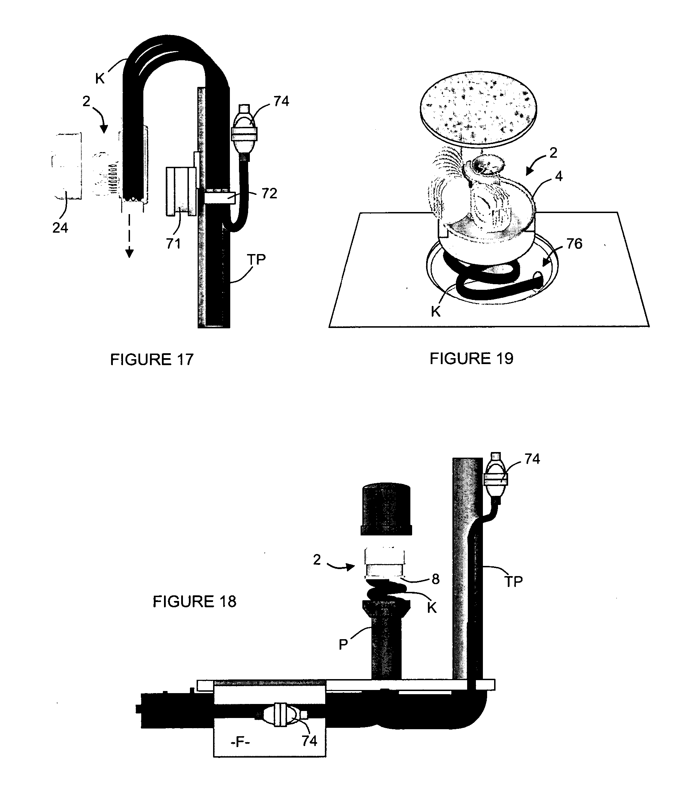

Turning first to Figures 14A to 14D, these depict top-down views of various storage implementations of the invention within footway boxes. Figure 14A shows an empty footway box ready to receive joints. A mounting frame (65) centrally-located within the pit has been provided, which includes slots for accommodating the mating projections of a mounting bracket. Figure 14B shows one joint (2) occupying half the available space within the footway box, while in Figure 14C the box is fully occupied with a joint on each side of the mounting frame. It would be appreciated that, depending on the relative sizes of the footway box and the joints, that more may be accommodated as shown in the three-joint application of Figure 14D. In all the cases shown, the joints have been shown stored within the footway boxes in an orientation so that their long axes are substantially horizontal. This allows for the joints to be raised using the unrolling motion without any need to undergo the separate motion of turning it through 90 degrees as would be the case if the long axis of the joint housing was to be vertical in a stored position. It would however be understood that this storage position is not an essential feature, and indeed examples of the invention in which the joint is stored on its cylindrical base are discussed below in connection with Figures 17 to 19.

It was noted above that in order to access a particular tray within the joint, it is necessary to turn the entire joint about its central axis. Figures 15A to 15D show four tray assembly (12) orientations in which the encircled sections in each drawing refers to a different tray sub-assembly (12). As noted above, the tray assembly unit cannot rotate about the central spine in this embodiment under discussion. To get access to a certain tray, the operative will need to turn the entire joint, as previously described in connection with Figure 13. Starting from the position shown in Figure 15a, the joint will need to be rotated clockwise in the direction of the arrow through about 270 degrees to orientate a tray in the sub-assembly highlighted in Figure 15D for the convenient access of a operative seeking on work on that tray. It should be remembered that the cables (K) are wrapped around the outside of the joint housing (4), so to ensure accessibility to all the trays, the length of the cables must suffice to enable the joint to be rolled to its fullest height; this height would also determine the minimum length of the mounting bracket or bar (66), as will be further discussed in connection with Figures 16A to 16F below.

These figures also illustrate how the joint can be built up in stages in response to demand (obviating the cost and effort of fully fitting the joint with trays on Day 1 regardless of the eventual requirements on it). So for example, the first sub-assembly highlighted in Figure 15A could either come factory-provided with the joint, or else it could be added when needed. Each sub-assembly in Figures 15B to 15D could be subsequently added in the order shown in turning the joint about 90 degrees in the clockwise direction. Figures 15A to 15D could each be seen to represent, as further sub-assemblies are added, that the tray population is respectively, 25%, 50%, 75% and 100% full within the joint.

It can also be seen from these drawings that the spine and backbone(s) are not fully surrounded by trays as noted earlier. Filling the space on the backplanes completely would prevent the trays from being pivoted open, so a sufficient amount of leeway has to be allowed to enable each tray to be accessed and worked upon without too much difficulty. In one embodiment, trays can pivot about the spine more than 90 degrees e.g. to about 110 degrees, thus enabling a clear view of the surface of the tray which needs to be worked upon. The fewer the trays the further open each tray can pivot in the assembly, but it has been found that leaving about six tray spaces empty on the backplane is an optimal or suitable compromise between capacity and tray surface availability.

It would be appreciated that variations and alternatives to the above-described build sequence are possible: for example, In an embodiment of the joint in which sub-assemblies of trays are not used, but which are individually attached directly to the central spine, it is possible to attach each individual tray separately or in batches.

Figures 16A to 16E also illustrate the manner in which a specific tray may be accessed within the joint (2) during use, or the tray build sequence discussed above in connection with Figures 15A to 15D, but in the context of the joint's position on the mounting bar (66). As may be seen, the joint is pinned onto the mounting bracket at different heights in dependence on where the desired tray is; in a build sequence, the joint height on the mounting bracket depends on the stage at which the building sequence is at.

Using these drawings to illustrate an exemplary build sequence of a splitter array sub-assembly (SASA), the joint is initially brought to the highest point on the mounting bar as shown in Figure 15A and secured. At this stage, on "Day 1", the cable (K) is led to the joint, the tubes therein broken and looped though into the fibre tube storage area (36 in Figure 5) for storage, as identified by the encircled section in the drawing. The fibre is stored, unspliced, on a fibre splice tray, unless and until a connection is to be made (which may also occur on "Day 1 "). At this point, as shown in Figure 16B, the joint is again brought to (or kept at) the uppermost part of the mounting bracket, and the first SASA unit (e.g. a 1 x8 optical splitter) mounted on its backplane is installed, bringing the tray population within the joint to 25% full. Figures 16C to 16E depicts successive stages of the population of the joint, in which second, third and fourth SASA units are installed bringing the tray population to 50%, 75% and 100% full. These subsequent installations may be all carried out on the same "Day 1"; more likely the joint will be released it from the mounting bracket and rolled back into the footway for storage before it is brought up again at some future time for a further installation(s).

It may be seen that from the drawings the joint of this embodiment and application is positioned at decreasing heights on the mounting bracket as further SASA units are installed, where the joint is rolled in a clockwise direction as shown by the arrow. In other words, the joint is placed at full height when the cable is brought to the joint and when the first SASA unit is being installed (Figures 16A and 16B), at three-quarters height when installing the second SASA (Figure 16C), at half height when installing the third SASA (Figure 16D), and at just a quarter of the full height when installing the fourth and last SASA (Figure 16E). Figure 16F depicts the footway box (F) occupied by two joints (assuming the footway box being otherwise unoccupied e.g. by other, legacy, copper plant) which in one embodiment can serve 64 customers.

The embodiments discussed above describe how the joint is stored underground e.g. in a footway box. It would be appreciated that the joint may be stored in other ways, as exemplified in Figures 17 to 19. Figure 17 shows how the joint (2) may be mounted on a telegraph or telephone pole (TP) to serve as e.g. a distribution point or a splitter node. In a stored position, the joint is accommodated on a cage (71) on the pole which can be removed to allow the joint to be moved to its working position. Cables (K) originating from the network and from customers arrive at the joint e.g. by being led up along the pole, or can be a suspended fibre cable, which may arrive via a manifold (74). These arriving cables are unsheathed at transition point (72), where the fibre tubular elements therein are re-sheathed using corrugated tube. These cables are then brought to the joint where they are stored in the manner discussed above in connection with e.g. Figure 2, i.e. around the joint housing. When work is required on the joint, it is rolled downwards (in the direction of the arrow) to unwrap the cables (K) in a manner similar to that described above in connection with e.g. Figure 13 except in the opposite direction. The joint can be brought down to a working height (which could be at ground level).

Another above-ground implementation is depicted in Figure 18, in which the joint (2) is stored within a post (P). Cables (K) can be led to the post and joint in a variety of ways: upwardly from an underground source through a footway box (F), or if the post is located near a telephone pole (TP), takes the form of an aerial fibre cable which may be fed into the post at its base or through an underground access port; the fibres of these cables can also arrive via manifolds (74). The post can comprise a street pillar serving as a housing for the joint, and a cover to protect the joint in storage. In this embodiment, the joint is stored in a different configuration from that described above: the long axis of the cylindrical housing is disposed substantially vertically. The cables (K) can be coiled around the housing in the fibre cable well in the manner discussed above, alternatively, they may be coiled (free coiled, or in a guided manner) below the fibre cable cover (8) for storage as shown in Figure 18. During use, the trays of the joint can be accessed and built up in a manner similar to that discussed in connection with Figures 15A to 15D.

These methods of implementing the invention does away with the need for additional footway boxes and manholes, which are expensive and disruptive (particularly in residential settings). By way of example, a single footway box can cost between £500 to £1,000 to construct in the UK at the present time. Aside from these issues, it may be simply that there is no room in the required location to dig one.

Yet another embodiment of the joint (2) is shown in Figure 19. Here, the joint housing (4) is directly inserted into a hole (76) in the ground which need not be finished or constructed to any particular standard as long as it were large enough to accommodate the joint in its housing. In one application, the hole can be drilled to the required dimensions and the joint simply dropped in. The cables (K) are, like the embodiment shown in Figure 18, coiled under the fibre cable cover (8) for storage: they can be direct buried, or can be led along in prepared ducts. A disc-like cover may be used to cover the hole (76) and its contents to protect the joint and to prevent accidental falls into the hole. Such a construction would considerably reduce the cost and time currently needed to install a conventional joint. Significantly, the space required is also much reduced.

The applications shown in Figures 17 to 19 could be replacements for joint deployment of the prior art or otherwise) in conventional footway boxes, or else be complementary to existing infrastructure.

It would be appreciated by the skilled person that the invention can be implemented in ways other than that described specifically herein and in the drawings. For example, there may be more or fewer than four tray sub-assemblies. The funnel of the spine need not have a circular cross section. Nor need the trays be arranged in a radial configuration on a curved surface: in one instance four sub-assemblies could be pivotably hinged against four flat surfaces so that the spine (or backplane) has a square cross section. In other variations, the tray need not be one for holding splices, but one which serves as storage, or purely for locking purposes where a point of weakness along the fibre may be located further along the fibre span.

In particular, the embodiments described herein describe or cover a number of inventions, and while they can be used to synergistic effect, they can nonetheless be usefully deployed in separate or alternative applications and contexts.

For example, there is provided an optical fibre joint comprising a housing, and an aperture in the housing, the aperture enabling an optical fibre cable to be led out of or into the housing, wherein the optical fibre joint can in use be moved between a storage position and a working position, and wherein in the storage position the optical fibre is wrapped around the housing, and in a working position the optical fibre is partially or fully unwrapped around the housing.

Here, the size of the joint is significantly reduced by re-orientating the exit (or entry) direction of the cable from the joint housing. In contrast with nodes of the prior art as discussed in connection with Figures 1A to 1D above, much of the length of the cable is taken up by wrapping, winding, or curving it around the joint housing when the joint is in a stored position within a footway box, post, or the like. When the joint is moved to its working position in which it needs to be raised or moved from the footway box, the cables are unwrapped from around the housing. The extent to which the cables are unwrapped depends on the desired height or distance for the joint from its resting, stored position, as previously discussed in connection with Figures 16A to 16E. In one embodiment, the housing is taller (or longer) than it is wide, and in which the aperture is located or configured to direct or allow the cable to exit (or enter) the housing in a direction which is orthogonal to the longer axis of the housing. Although both the prior art and the above embodiments describe joints and housings which have a generally cylindrical outline, this need not be the case for the invention discussed here: the housing may be any shape.

In another embodiment, the cable can be stripped of its tough outer sheath and re-housed in a more pliable tube for greater ease of wrapping. In yet another embodiment, the aperture could serve as a transition point in which the fibre tubular elements housed within the fibre cables are broken out on entry into the joint housing. In another embodiment, the joint is raised and lowered into the footway box using a rolling action to move it between a storage position and a working position.

In another invention, there is provided a method of moving an optical fibre joint between a storage position and a working position by rotating the optical fibre joint about its central or longitudinal axis.

Here, moving the joint to attain its working position by rolling or rotating it about its central or longitudinal axis, can be contrasted with the manner in which prior art joints are raised, by rotating its central or longitudinal axis through 90 degrees. Raising (or lowering) the joint in this way has the advantage of allowing access to all parts of the joint without need for the operative to himself move around the joint.

In one embodiment, the method includes pinning the optical fibre joint into place on a bar when the optical fibre joint has been moved to a working position. In another embodiment, the method includes rotating the optical fibre joint about its central or longitudinal axis to move it in a direction opposite to the first direction until the optical fibre joint reaches a storage position.

In another embodiment, the joint is raised or lowered in height during the rotating action. In a further embodiment, there are a plurality of working positions, and the step of rotating the joint to find the next working position may be iterated the desired number of times to enable access to the desired section of the joint before it is brought back to its resting, storage position by rotation about its central or longitudinal axis. In a yet further embodiment, the rotating action serves to wrap or unwrap an optical cable around the housing of the joint. Again, although the overall shape of the housing may be cylindrical, this is not essential to realise the advantages of the invention.

In another invention, there is provided an optical fibre tray for accommodating a fibre connection comprising
- a tray base including attachment means at a first end of the tray base for attachment to a backplane, and
- means for accommodating a fibre splice or an fibre optical connector at a second end of the tray base, the second end being located substantially diametrically opposite to the first end,
wherein the tray base tapers in thickness along a line from the first end to the second end of the tray base.

Here, an optical connector for mechanically connecting or connectorising optical fibres can be deployed on a tray of a size suitable also for housing spliced fibres. As noted earlier, apparatus housing optical connections using connectors are of dimensions typically much greater than joint or nodes for spliced fibres. The reduced size is an advantage especially in a FTTx context. In one embodiment, the accommodation means of the tray can be modular to accommodate spliced or connectorised fibres, with any necessary physical adaptation. In another embodiment, the trays are disposed in a radial fashion about the backplane or a spine.

The apparatus, methods and configurations described above and in the drawings are for ease of description only and not meant to restrict the invention to any particular embodiments. It will be apparent to the skilled person that various sequences and permutations on the apparatus and methods described are possible within the scope of this invention as disclosed.

## Claims

1. A method of moving an optical fibre joint between a storage position within a pit and a working position substantially outside the pit, by rolling the optical fibre joint about its longitudinal axis.

2. A method according to claim 1 wherein the optical fibre joint is moved between the storage position and a plurality of working positions by rolling the optical fibre joint to raise it to a selected one of the plurality of working positions each position being located at a different height above the pit.

3. A method according to claim 2 further including securing the optical fibre joint at a selected one of the plurality of working positions by pinning the optical fibre joint to a selected part of a mounting bar inserted into the pit.

4. A method according to claim 2 or claim 3 further including selecting a working position to enable a user to install an optical fibre tray to a selected part of the optical fibre joint.

5. A method according to claim 2 or claim 3 further including selecting a working position to enable a user to access an optical fibre tray at a selected part of the optical fibre joint.

6. A method according to any one of claims 2 to 5 comprising moving the optical fibre joint iteratively by rolling it between the storage position and more than one of the plurality of working positions.

7. A method according to claim 6 wherein moving the optical fibre joint iteratively enables installation of, or working on, a plurality of optical trays at different times.

8. A method according to any preceding claim further comprising at least one of
- fully or partially unwrapping an optical fibre around the circumferential surface of a cylindrical housing of the optical fibre joint when moving the optical fibre joint from a storage position to the working position, or
- fully or partially wrapping the optical fibre around the circumferential surface of the cylindrical housing of the optical fibre joint when moving the optical fibre joint from the working position to the storage position.

9. An optical fibre joint comprising
- a cylindrical housing, and
- securing means,
wherein the optical fibre joint is configured to move between a storage position within a pit and a working position substantially outside the pit by rolling the optical fibre joint about its longitudinal axis, the optical fibre joint, and to be secured in the working position using the securing means.

10. An optical fibre joint according to claim 9 comprising a central spine to which one or more optical fibre trays can be radially attached.

11. An optical fibre joint according to claim 9 or claim 10 comprising one or more optical fibre trays radially attached to a central spine.

12. An optical fibre joint according to any one of claims 9 to 11 for use with an optical fibre cable which extends from the housing, wherein in the storage position the optical fibre is wrapped around the circumferential surface of the cylindrical housing, and in a working position the optical fibre is partially or fully unwrapped around the circumferential surface of the housing.

13. An optical fibre joint according to any one of claims 9 to 12 wherein the securing means comprises a perforation on the housing for cooperation with a retaining pin on a mounting bar for moving the optical fibre joint to one of a plurality of working positions at different heights above the pit.
